# EUROPEAN PATENT SPECIFICATION

(11) **EP 1 502 405 B1**
(45) Date of publication and mention of the grant of the patent: **23.01.2008**
(21) Application number: 03722578.6
(22) Date of filing: 30.04.2003
(51) Int. Cl.: H04L 29/06, H04L 12/18

(54) **MULTINET SESSION MANAGEMENT**
MULTINETZSITZUNGSVERWALTUNG
GESTION DE SESSION MULTINET

(30) Priority: 30.04.2002 EP 02009777; 19.07.2002 EP 02016141; 23.07.2002 US 201446; 11.09.2002 EP 02020332; 29.01.2003 US 354709; 30.04.2003 US 426531
(43) Date of publication of application: 02.02.2005
(73) Proprietor: ComBOTS Product GmbH, 76227 Karlsruhe (DE)
(72) Inventor: SCHNEIDER, Uwe, 76356 Weingarten (DE); HOFFMANN, Jürgen, 76137 Karlsruhe (DE); MAURER, Uwe, 76135 Karlsruhe (DE)
(74) Representative: DTS München
(86) International application number: PCT/EP2003/004539
(87) International publication number: WO 2003/094430

(56) References cited:
- EP-A- 1 130 869
- WO-A-00/69140
- WO-A-98/23058
- WO-A-99/45691
- US-A1- 2002 025 813
- S. PETRACK; L. CONROY: "the PINT Service Protocol: Extensions to SIP and SDP for IP Access to Telephone Call Services" IETF RFC2848, [Online] 30 June 2000 (2000-06-30), pages 1--73, XP002259827 Retrieved from the Internet: <URL:http://www.faqs.org/ftp/rfc/pdf/rfc28 48.txt.pdf> [retrieved on 2003-10-30]
- M. KRISHNASWAMY; D. ROMASCANU: "Management Information Base for the PINT Service Architecture" IETF RFC3055, [Online] XP002259828 Retrieved from the Internet: <URL:http://www.faqs.org/ftp/rfc/pdf/rfc30 55.txt.pdf> [retrieved on 2003-10-30]

## Description

### BACKGROUND

In general, the present invention relates to communications of a specific entity performed in or via different communications environments. In particular, the present invention relates to registration of such communications of the specific entity.

A communications environment may be a communications system comprising more than one component, i.e., more than one device and/or type of device, media and/or type of media, network and/or type of network. Thus, a communications environment or communications system might for instance comprise a telephone, a Public Switched Telephone Network (PSTN), a gateway to the Internet, etc.

A user can communicate by means of different communications media in different communications environments such as mobile and stationary telephone networks, computer-based networks such as the Internet, different computer-based communications services such as E-mail, FTP and the like. For periods of time, a user can be contacted by means of communications in one or several of different communications environments. Further, the user can simultaneously and/or subsequently employ different communications environments for communications purposes. For using a communications environment, a user establishes, maintains and terminates individual sessions, or communications activity periods, associated with the user and each associated with a communications related context. Actions and events occurring in such a session in one communications environment take place independently from actions and events in a session of another communications environment. This is mainly due to the fact that different communications environments are operated independently from each other.

A "session" may describe a connection established by a user with a login until either the user or the system or service .to which he connected terminates the connection. Normally, a user need only provide credentials for authentication at the start of a (login) session. He is then authorized to use some or all of the services offered by the host system to which he connected. A login may be implicit in that merely having access to a device also grants all rights associated with the device to the current user as, for example, with a common telephone that is not locked. In this sense a telephone call is a session on the PSTN.

For example, a session performed by means of a telephone, for example in a PSTN-based, GSM or UMTS communications environment, lasts as long as the user of the telephone maintains the current telephone communications link thereto. A session in a computer-based communications environment, for example the Internet, lasts as long as the user who has initiated that session maintains a respective communications link, for example to an Internet provider or to a web site. Although the user can perform these different sessions at the same time, it is not possible to provide information concerning a session in one of the employed communications environments to another employed communications environment. Rather, information concerning a session of a communications environment is only available within that communications environment due the closed character of the communications environment.

US 2002/0025813A1 describes a central entity for administering terminals of a user.

### SUMMARY OF THE INVENTION

An object of the present invention is to make information about communications performed in one communications environment available outside that communications environment.

In particular, the present invention is directed to allowing information regarding communications performed in different communications environments available outside these communications environments and available for access in at least one of the communications environments.

The present invention provides a method for multinet session management. The method includes: executing first communications in a first communications environment using a specific entity; executing second communications in a second communications environment using the specific entity; and registering the first and second communications using a processor configured to register communication.

The registering may be performed by identifying at least one of the first and the second communications present invention. The present invention may further include providing respective information regarding the first and second communications using a first connecting device connected to the first communications environment and a second connecting device connected to the second communications environment. Moreover, the present invention may further include storing data of the registering using a memory unit.

The present invention also provides a device for multinet session management. The device includes an interface device configured to receive information regarding communications executed in a first and a second communications environment. A processor configured to register the communications executed in the first and the second communications environment is provided.

Also provided by the present invention is a telecommunications web site associated with a specific entity. The telecommunications web site includes a web page corresponding to the specific entity, and a processor configured to register respective communications executed in a first and a second communications environment.

The present invention also provides a computer readable medium having stored thereon computer executable process steps operative to perform a method for multinet session management. The method includes executing first communications in a first communications environment using a specific entity; executing second communications in a second communications environment using the specific entity; and registering the first and second communications using a processor configured to register communications.

"Multinet session management" herein refers to providing information about respective communications occurring in respective sessions in at least two communications environments.

The present invention provides a device and method for multinet session management that serve to link independent sessions in different communications environments and contexts associated thereto in a variety of ways. The present invention allows for an assignment of sessions and session contexts of different communications environments to a specific entity. As a result, communications of a specific entity and related sessions and contexts respectively, can be searched, traced and found in the respective communications environment. Further, the present invention makes it possible to control a session or communication in or of a communications environment beyond the boundaries of that communications environment. For example, using the present invention enables the indication of a telephone-based communication/session in a telephone network by means of a personal computer and a browser executed thereon, respectively, via a computer-based communications environment such as the Internet. This can be accomplished by searching/tracing/finding the telephone communication/session by means of multinet session management according to the present invention.

It is contemplated that multinet session management according to the present invention can be carried out by an "authority" external to the communications environment concerned or can form a part or component of one of the communications environments in question.

Moreover, multinet session management according to the present invention allows combinations of contexts of communications/session in real-time to update the combination information of a multinet management session according to the present invention. For example, as soon as a session is initiated or terminated, multinet session management according to the present invention provides for respective information.

Multinet session management according to the present invention does not impose restrictions to the access of communications environments in question such that, for example, the number of devices, units and systems used in a communications environment is not necessarily limited. Multinet session management according to the present invention registers communications/sessions in different communications environments.

For respectively obtaining communication/session and context related information, multinet session management according to the present invention employs hardware and/or software means (e.g., devices, units, systems, methods, software program products) to contact to communications environments in question in such a manner that multinet session management can obtain its requested information. Such contacts or connections can be obtained by means of hardware and/software interfaces, gateways, nodes, network cards and other connecting means.

### BRIEF DESCRIPTION OF THE DRAWINGS

In the following description, the present invention is elaborated upon based on exemplary embodiments, with reference to the drawings.
Fig. 1 shows a schematic diagram depicting multinet session management according to a first embodiment of the present invention.
Fig. 2 shows a schematic diagram depicting multinet session management according to a second embodiment of the present invention.
Fig. 3 shows a schematic diagram depicting multinet session management according to a third embodiment of the present invention.
Fig. 4 shows a schematic diagram depicting multinet session management according to a fourth embodiment of the present invention.
Fig. 5 shows a schematic diagram of a multinet session management device according to an embodiment of the present invention.

### DETAILED DESCRIPTION

An embodiment of the present invention includes a computer unit or a system having interface means which allow for a connection to communications environments and respective software means to implement the principals according to the present invention. The interface means, for example an Internet interface, will support connections to communications environments with different characteristics, for example for connection to a telephone communications environment and the Internet. The software means can be embodied in any computer programming language (e.g., "C++") and provides functions for the management of communication/sessions in different communications networks. These functions may include registration of communications/sessions in different communications environments, deleting of respective communications/session information also with regard to particular communications environments and searching/retrieving of communications/sessions of a particular user, for example of communications/sessions which are associated/related to each other. In an embodiment of the present invention, registration of communications/sessions includes storing information about a session persistently. For example, a database entry is made for a phone call. The database entry in an embodiment includes information about the phone numbers involved, the names or other identification of the involved people, date, time, duration, and any other information considered useful. Communications between communications environments and multinet session management according to the present invention can be carried out on the basis of various techniques, for example CORBA, SOAP, HTTP(S), etc:

In particular, an embodiment of the present invention provides a multinet session management device for registration of communications of a specific entity in at least two communications environments.

The term "specific entity" as used herein may refer to a person, a company or any other entity including a specific user of the communications environments, a specific address related to the communications in the communications environments, a specific location to and from which communications in the communications environments are performed, a specific end user unit for the communications in the communications environment, etc.

The term "end user unit" as used herein may refer in an embodiment to a unit or device comparable to a telephone or providing its functions. In other embodiments, an end user unit may be another device that can be used for communications, for example a keyboard, a computer terminal, a mobile phone, a fax, a telex, a mail pigeon, an ordinary letter, a scanner, a PSTN device, a Third Generation (3G) wireless communications device, especially a UMTS device, etc. Moreover, an end user unit may be a telecommunications web site, a telecommunications portal comprising more than one telecommunications web sites or a device using a browser-based application.

In order to obtain information for the registration of the communications, multinet session management device can comprise means for connecting to the at least two communications environments. With respect to different properties, characteristics and standards of different communications environments, it is contemplated that multinet session management device comprises connecting means for each of the at least two communications environments.

For storing information characterizing registered communications, multinet session management device can comprise a memory comprising, e.g., RAMs, hard disks, mass storage devices, storage tapes and the like.

Searching, tracing, finding, and the like of a specific communication of the specific entity (e.g., single particular communications, communications related to a specific context and a like) can also be executed by multinet session management device.

Usually, communications in communications environments are not rejected to communications of a specific entity. Thus, multinet session management advice can comprise means for determining or identifying from any communications in the at least two communications environment which thereof are associated to and/or performed by the specific user.

According to a preferred embodiment multinet session management device provides for a registration for communications of the specific entity that are performed by end user units specifically adapted for communications in one of the communications environments.

Further, the present invention provides a telecommunication web site which implements the registration of communications of a specific entity in at least to communications environments and embodiments thereof as described above with the respect to multinet session management device.

In particular it is contemplated that the telecommunications web site according to the present invention is a telecommunications web site with which the specific entity is associated.

The terms "web site" and "web page" refer herein sites and sub-sites associated thereto which can be uniquely addressed by means of a single address, like a telephone number or an IP address, a uniform resource locator (URL), etc. A web site may be used in a 3G-communication environment, especially an UMTS environment. A web site may be a site on the Internet with a specific URL, such as a site on the World Wide Web, which can be accessed by Internet visitors, and by the web site host. The web site host is the owner of the web site.

A web site can include one or more web pages. These web pages are part of the one web site. It should be noted that the terms "web site" and "web page" are not to be considered to limit the present invention to conventional Internet web sites and web pages. Thus, the web site and its web page(s), respectively, can be accessed by establishing a communications link from the first end user unit independently of the network(s) employed.

A telecommunications web site is preferably a web site adapted to provide, upon an access event, for private communications between two entities. Preferably, the telecommunications web site corresponds to a first specific entity and is adapted to provide, upon an access by the first end user unit, for private communications between the first end user unit and the first specific entity. The terms "telecommunications web site", "web site" and "web page" may be understood to encompass software and hardware components effecting these entities. Such components may include one or more processors, for example.

A telecommunications web site is assigned to or personalized for or corresponding to a specific person or entity. Such a specific entity can be a person, a company or any other entity. The specific entity preferably acts as the host of the telecommunication web site. The specific entity may be a single entity, e.g., a specific user or owner (e.g., a single person, a company, a unit of a company, etc.) of the telecommunications web site, a specific address, a specific location, a specific end user unit and the like.

For providing the information concerning the registered communications, the telecommunications web site can comprise respective means, e.g., graphical user interface, and/or employed respective measures.

Properties and functions of a telecommunications web site are described in commonly-assigned U.S. patent application number US-2004-0019629-A1, entitled "Communications Environment," filed July 23, 2002, and in commonly-assigned U.S. patent application US-2004-0148392-A1 entitled "Web Site Having an Event Identification Element," filed January 29, 2003, both of which are hereby incorporated by reference herein.

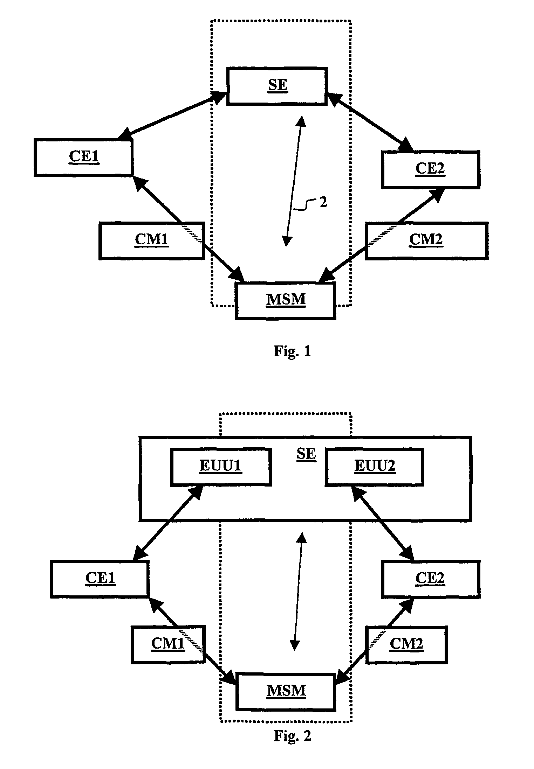

In an embodiment, the present invention provides a telecommunications web site being operatively connected or comprising multinet session management device as described above. In another embodiment, the present invention provides a communications environment comprising or being operatively connected to multinet session management device according to the present invention. In yet another embodiment, the present invention provides units, means and the like for implementing or carrying out the registration of communications of a specific entity in at least two communications environments. Fig. 1 shows a specific entity SE that executes/performs communications by means of a first communications environment CE1 and by means of a second communications environment CE2. For such communications, the specific entity SE can employ an end user unit (not indicated in this figure) capable of providing for communications with the respect to both the first and the second communications environment CE1 and CE2.

By means of connecting units CM1 and CM2 , such as gateways, interfaces and the like, multinet session management device MSM can obtain information from these communications environments with the respect to communications performed therein by the specific entity SE. To be able to identify communications within these communications environments, multinet session management device MSM can be provided information characterizing the specific entity SE and communications thereof, respectively. This can be accomplished by providing such information from the specific entity SE to multinet session management device MSM (which is illustrated in that figure by the arrow 2 between the specific entity SE and multinet session management device MCM) or from a database (not shown in this figure) to which multinet session management device MSM can access.

In order to make communications related information from multinet session management device MSM available/accessible, such information can be communicated via one of the communications environments CE1 and CE2 to the specific entity SE upon request from the specific entity SE and/or under control of multinet session management device MSM.

Further, as indicated by the arrow 2 between the specific entity SE and multinet session management device MCM, such information can also be communicated directly. This can be accomplished by an access of the specific entity SE directly to multinet session management device MCM ("data pull") and/or by sending/forwarding from multinet session management device MCM ("data push"). Communications links for the latter case comprise, telephone links/lines, Internet links and the like. Moreover, it is possible that multinet session management device MCM is part of or associated with the specific entity SE (this is illustrated in Fig. 1 by the dotted line surrounding the specific entity SE and multinet session management device MCM). Then, such information will be inherently available for the specific entity SE.

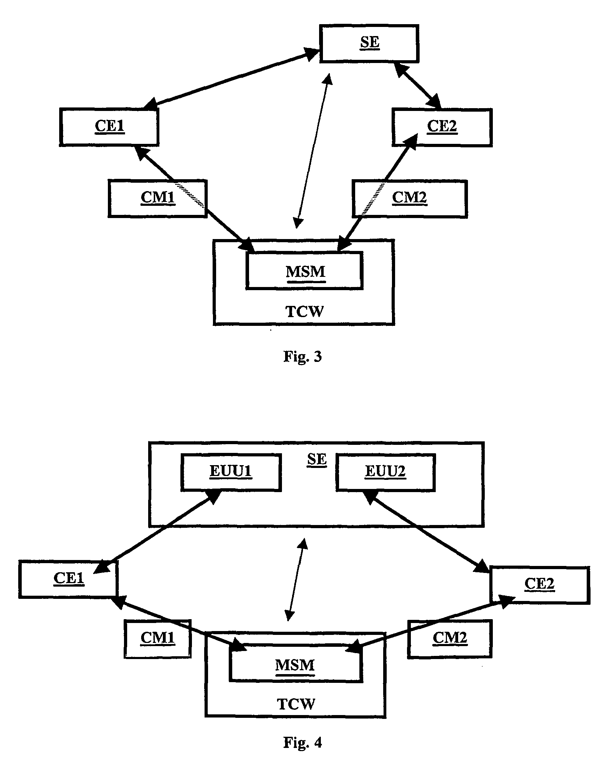

In Fig. 2, an embodiment is illustrated wherein the specific entity SE employs different end user units, namely a first end user unit EUU 1 and the second end user unit EUU 2, for respectively executed communications by means of the first communications environment CE1 and the second communications environment CE2.

Although Figs. 1 and 2 illustrate just two different communications environments, the observations given above with reference to Fig. 1 apply correspondingly for a specific entity communicating by means of three, four, five, etc., communications environments. This is also true for the number of end user units associated to a specific entity. Also, multinet session management device MSM is capable of a registration of communications of any number of the specific entity without limiting the number of end user units and/or communications environments.

Fig. 3 illustrates an embodiment of the present invention where multinet session management device MSM is part of a telecommunications web site TCW. Here, multinet session management device MSM can be embodied as hardware/software components of the telecommunications web site TCW. In another embodiment, multinet session management device MSM is operatively connected to the telecommunications web site TCW. Observations given above with reference to Figs. 1 and 2 and with respect to multinet session management device MSM, the specific entity SE, first and second communications environments CE1 and CE2, and the connecting means CM1 And CM2 also apply here. Further, the use of a telecommunications web site TCW enables information generated by multinet session management MSM to be provided in an enhanced manner. Since the telecommunications web site TCW is uniquely associated with the specific entity SE, the provision of such information can be integrated with the providing of other information by the telecommunication web site TCW to the specific entity SE and with other interaction between the telecommunication web site TCW and the specific entity SE.

As in Fig. 2, Fig. 4 illustrates an embodiment of the present invention where the specific entity SE employs two end user units EUU 1 and EUU 2 for respectively communicating over the first and the second communications environment CE1 and CE2. As in Fig. 3, a telecommunication web site TCW is employed which integrates or implements a multinet session management device MSM. In another embodiment, multinet session management device MSM is operatively assigned/associated/connected to the telecommunication web site TCW.

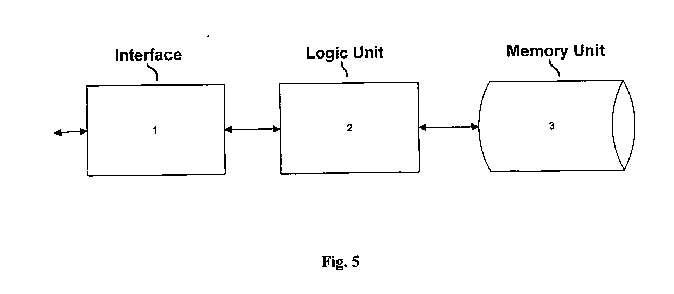

Fig. 5 shows a schematic diagram of an embodiment of the multinet session management device MSM according to the present invention. Multinet session management device MSM includes an interface unit 1, a logic unit 2 and a memory unit 3. The interface unit 1 includes hardware and software for communicating with, e.g., end user units EUU1 and EUU2 or other end user units or clients of the multinet session management device MSM. Interface1 allows the end user units or clients to call registration functions of multinet session management device MSM.

The logic unit 2 includes hardware, including a suitable processor, and software for performing the desired functions of, e.g., registration, deregistration, registration information lookup, etc., on data stored in the memory unit 3. In one embodiment, the memory unit 3 includes a database installed on suitable hardware. In general the hardware could be any suitable computer hardware (e.g., from Intel, Sun Microsystems, IBM, etc,), while the software would be written in any suitable computer language (e.g., C++, Java, Python,

Assembler, etc.). The interfacel implements at least the above functions of registration, deregistration (i.e., deletion) and lookup of information. In an embodiment the logic unit 2 also provides an expire feature for deleting database after a given time where, for instance, deregistration has failed.

In one embodiment the interface 1 is a CORBA interface and CORBA orb (object request broker). In that embodiment the logic unit 1 is a compiled C++ program incorporating the CORBA orb with the interface and using a database library to talk to the database of the memory unit 3. In that embodiment the memory unit 3 is any suitable database server (e.g., ORACLE, mySQL, etc.) with tables for performing the functions described above. In an embodiment, the database provides one table to store all the information provided by the registration function of the interface 1.

The registration function requires the following parameters: user identification, date, time and environment. The user identification is a unique number associated with a user, date and time are the current date and time, and the environment denotes an environment and a specific session on that environment, e.g., by a letter and number combination, such as, for example, 'p12345' to register phone call 12345. This function returns an 'OK' on successful registration and an error message on failure.

The deregistration function requires the following parameters: user identification and environment. As described above relative to the registration function, the user identification is a unique number associated with a user, and the environment denotes an environment and a specific session on that environment, e.g., by a letter and number combination, such as, for example, 'p12345' to deregister phone call 12345. This function returns an 'OK' on successful deregistration and an error message on failure.

The lookup of information function requires the user identification parameter. This function returns a list of environment information. This list is compiled by an appropriate SQL statement in the logic unit 2.

An example of the multinet session management according to an embodiment of the present invention may be described with reference to Figs. 4 and 5 as follows:

The specific entity SE starts to use one communications environment (e.g., performs a login on the Internet to the associated telecommunication web site TCW). After the successful login, the telecommunication web site TCW calls the registration function of the interfacel of the multinet session management device MSM, providing information such as date, time, user identification, expire time of the login, interface of the user used to connect to the TCW, etc. The logic unit 2 stores this information in the memory unit 3 for later use. The specific entity SE then starts to use a second communications environment (e.g., initiates a telephone call). The telephone call is registered similarly to the login via the Internet above, using the same or a similar registration function of multinet session management device MSM, but this time via the connection unit CM1. Connection unit CM1 provides the multinet session management device MSM information such as date, time, user identification, phone numbers, etc. The logic unit 2 stores this information in the memory unit 3 for later use. The telecommunication web site TCW can access the information stored in the multinet session management device MSM about the ongoing phone call and the current login. A user identifier is attached to each entry in the memory unit 3. This identifier can be used to gather all information related to a selected user, such as the specific entity SE.

## Claims

1. A method for multinet session management, comprising:
executing first communications in a first communications environment (CE1) using a specific entity (SE);
executing second communications in a second communications environment (CE2) using the specific entity (SE); and
registering the first and second communications using a processor (2) configured to register communications
**characterised by**
providing with a multinet session management device (MSM) respective multinet session information regarding the first and second communications using a first connecting device (CM1) connected to the first communications environment (CE1) and a second connecting device (CM2) connected to the second communications environment (CE2), wherein the multinet session information is about communications occurring in sessions in said communications environments (CE1, CE2),
the processor (2) being associated to a telecommunications web site (TCW) providing said multinet session information to the specific entity (SE).

2. The method as recited in claim 1 further comprising storing data of the registering using a memory unit (3).

3. The method as recited in any of claims 1 to 2 wherein the registering is performed by identifying at least one of the first and the second communications.

4. The method as recited in any of claims 1 to 3 wherein the executing the first and the second communications are performed using a first and second end user unit (EUU1, EUU2), respectively, associated with the specific entity (SE).

5. A multinet session management device (MSM), comprising:
an interface unit (1) configured to receive multinet session information regarding communications executed in a first and a second communications environment (CE1, CE2) wherein the multinet session information is about communications occurring in sessions in said communications environments;
a logic unit including a processor (2) and configured to register the multinet session information; and
a memory unit (3) configured to store the registered multinet session information,
the processor (2) being associated with a telecommunications web site (TCW) providing said multinet session information to a specific entity (SE).

6. The device as recited in claim 5 wherein the interface unit (1) is configured to receive a portion of the multinet session information from a connection unit of the first communications environment (CE1).

7. A telecommunications web site (TCW) associated with a specific entity (SE), comprising:
a web page corresponding to the specific entity (SE); and
a processor (2) configured to register respective communications executed in a first and a second communications environment (CE1, CE2), **characterised by** the processor (2) is configured to be connected to the first and second communications environments (CE1, CE1) using a first and a second connecting device (CM1, CM2), respectively, so as to receive multinet session information, wherein the multinet session information is about the communications occurring in sessions in said communications environments, the telecommunications web site (TCW) providing said multinet session information to the specific entity (SE).

8. The telecommunications web site (TCW) as recited in claim 7 wherein the processor (2) is configured to provide the specific entity (SE) with respective information regarding the respective communications.

9. The telecommunications web site (TCW) as recited in any of claims 7 to 8 wherein the processor (2) is configured to identify the respective communications executed in a first and a second communications environment (CE1, CE2).

10. The telecommunications web site (TCW) as recited in claim 9 wherein the processor (2) is configured to identify the respective communications executed in a first and a second communications environment (CE1, CE2) using search information provided by the specific entity (SE).

## Patentansprüche

1. Verfahren für Multinet-Sitzungs-Management, umfassend:
Ausführen einer ersten Datenübertragung in einer ersten Datenübertragungsumgebung (CE1) unter Verwendung einer spezifischen Einheit (SE);
Ausführen einer zweiten Datenübertragung in einer zweiten Datenübertragungsumgebung (CE2) unter Verwendung einer spezifischen Einheit (SE); und
Erfassen der ersten und zweiten Datenübertragung unter Verwendung eines Prozessors (2), der so konfiguriert ist, dass er Datenübertragungen erfasst, **dadurch gekennzeichnet, dass**
er mit einer Multinet-Sitzungsmanagement-Vorrichtung (MSM) entsprechende Multinet-Sitzungsinformationen bezüglich der ersten und der zweiten Datenübertragung unter Verwendung einer ersten, mit der ersten Datenübertragungsumgebung (CE1) verbundenen Verbindungsvorrichtung (CM1) und einer zweiten, mit der zweiten Datenübertragungsumgebung (CE2) verbundenen Verbindungsvorrichtung (CM2) bereitstellt, wobei die Multinet-Sitzungsinformationen Datenübertragungen betreffen, die in Sitzungen in den Datenübertragungsumgebungen (CE1, CE2) stattfinden,
wobei der Prozessor (2) mit einer Telekommunikations-Webseite (TCW) verbunden ist, die der spezifischen Einheit (SE) die Multinet-Sitzungsinformationen bereitstellt.

2. Verfahren, wie in Anspruch 1 angeführt, das ferner das Speichern der erfasste Daten unter Verwendung einer Speichereinheit (3) umfasst.

3. Verfahren, wie in einem der Ansprüche 1 oder 2 angeführt, bei dem die Erfassung durch Identifizierung zumindest einer der ersten und zweiten Datenübertragungen durchgeführt wird.

4. Verfahren, wie in einem der Ansprüche 1 bis 3 angeführt, bei dem die erste und die zweite Datenübertragung unter Verwendung einer ersten bzw. einer zweiten Endanwendereinheit (EUU1, EUU2), die mit der spezifischen Einheit (SE) verbunden sind, durchgeführt werden.

5. Multinet-Sitzungsmanagement-Vorrichtung (MSM), umfassend:
eine Schnittstelleneinheit (1), die so konfiguriert ist, dass sie Multinet-Sitzungsinformationen bezüglich in einer ersten und in einer zweiten Datenübertragungsumgebung (CE1, CE2) durchgeführten Datenübertragungen empfängt, wobei die Multinet-Sitzungsinformationen Datenübertragungen, die in Sitzungen in den Datenübertragungsumgebungen stattfinden, betreffen;
eine Logikeinheit, einschließlich eines Prozessors (2) und so konfiguriert, dass sie die Multinet-Sitzungsinformationen erfasst; und
eine Speichereinheit (3), die so konfiguriert ist, dass sie die erfassten Multinet-Sitzungsinformationen speichert, wobei der Prozessor (2) mit einer Telekommunikations-Webseite (TCW) verbunden ist, die einer spezifischen Einheit (SE) die Multinet-Sitzungsinformationen bereitstellt.

6. Vorrichtung, wie in Anspruch 5 angeführt, bei der die Schnittstelleneinheit (1) so konfiguriert ist, dass sie einen Teil der Multinet-Sitzungsinformationen von einer Verbindungseinheit der ersten Datenübertragungsumgebung (CE1) empfängt.

7. Telekommunikations-Webseite (TCW), die mit einer spezifischen Einheit (SE) verbunden ist, umfassend:
eine Webseite, die der spezifischen Einheit (SE) entspricht; und
einen Prozessor (2), der so konfiguriert ist, dass er entsprechende, in einer ersten und einer zweiten Datenübertragungsumgebung (CE1, CE2) durchgeführte Datenübertragungen erfasst, **dadurch gekennzeichnet, dass** der Prozessor (2) so konfiguriert ist, dass er unter Verwendung einer ersten bzw. einer zweiten Verbindungsvorrichtung (CM1, CM2) mit der ersten und der zweiten Datenübertragungsumgebung (CE1, CE2) verbunden ist,
um Multinet-Sitzungsinformationen zu empfangen, wobei die Multinet-Sitzungsinformationen die Datenübertragungen betreffen, die in Sitzungen in den Datenübertragungsumgebungen stattfinden, und die Telekommunikations-Webseite (TCW) der spezifischen Einheit (SE) die Multinet-Sitzungsinformationen bereitstellt.

8. Telekommunikations-Webseite (TCW), wie in Anspruch 7 angeführt, bei der der Prozessor (2) so konfiguriert ist, dass er der spezifischen Einheit (SE) entsprechende Informationen bezüglich der entsprechenden Datenübertragungen bereitstellt.

9. Telekommunikations-Webseite (TCW), wie in einem der Ansprüche 7 bis 8 angeführt, bei der der Prozessor (2) so konfiguriert ist, dass er die entsprechende, in einer ersten und einer zweiten Datenübertragungsumgebung (CE1, CE2) durchgeführte Datenübertragung identifiziert.

10. Telekommunikations-Webseite (TCW), wie in Anspruch 9 angeführt, bei der der Prozessor (2) so konfiguriert ist, dass er die entsprechende, in einer ersten und einer zweiten Datenübertragungsumgebung (CE1, CE2) durchgeführte Datenübertragung unter Verwendung von Suchinformationen, die von der spezifischen Einheit (SE) bereitgestellt werden, identifiziert.

## Revendications

1. Procédé pour une gestion de session multiréseau, comprenant:
l'exécution de premières communications dans un premier environnement de communication (CE1) en utilisant une entité spécifique (SE);
exécution de secondes communications dans un second environnement de communication (CE2) en utilisant l'entité spécifique (SE); et
enregistrement des premières et secondes communications en utilisant un processeur (2) configuré pour enregistrer des communications,
**caractérisé par**:
le fait de munir un dispositif de gestion de session multiréseau (MSM) d'une information de session multiréseau respective concernant les premières et secondes communications en utilisant un premier dispositif de connexion (CM1) connecté au premier environnement de communication (CE1) et un second dispositif de connexion (CM2) connecté au second environnement de communication (CE2), dans lequel l'information de session multiréseau concerne des communications réalisées dans des sessions dans lesdits environnements de communication (CE1, CE2), le processeur (2) étant associé à un site web de télécommunication (TCW) fournissant ladite information de session multiréseau à l'entité spécifique (SE).

2. Procédé selon la revendication 1, comprenant le stockage de données de l'enregistrement en utilisant une unité de mémoire (3).

3. Procédé selon l'une quelconque des revendications 1 et 2, dans lequel l'enregistrement est réalisé en identifiant au moins l'une des premières et secondes communications.

4. Procédé selon l'une quelconque des revendications 1 à 3, dans lequel l'exécution des premières et secondes communications est réalisée en utilisant de façon respective des première et seconde unités d'utilisateur final (EUU1, EUU2) associées à l'entité spécifique (SE).

5. Dispositif de gestion de session multiréseau (MSM), comprenant:
une unité d'interface (1) configurée pour recevoir une information de session multiréseau concernant des communications exécutées dans des premier et second environnements de communication (CE1, CE2), dans lequel l'information de session multiréseau concerne des communications réalisées dans des sessions dans lesdits environnements de communication;
une unité logique incluant un processeur (2) et configurée pour enregistrer l'information de session multiréseau; et
une unité de mémoire (3) configurée pour stocker l'information de session multiréseau enregistrée,
le processeur (2) étant associé à un site web de télécommunication (TCW) fournissant ladite information de session multiréseau à une entité spécifique (SE).

6. Dispositif selon la revendication 5, dans lequel l'unité d'interface (1) est configurée pour recevoir une partie de l'information de session multiréseau depuis une unité de connexion du premier environnement de communication (CE1).

7. Site web de télécommunication (TCW) associé à une entité spécifique (SE), comprenant:
une page web correspondant à l'entité spécifique (SE); et un processeur (2) configuré pour enregistrer des communications respectives exécutées dans les premier et second environnements de communication (CE1, CE2),
**caractérisé en ce que**:
le processeur (2) est configuré pour être connecté aux premier et second environnements de communication (CE1, CE2) en utilisant de façon respective des premier et second dispositifs de connexion (CM1, CM2) de manière à recevoir une information de session multiréseau, dans lequel l'information de session multiréseau concerne les communications réalisées dans des sessions dans lesdits environnements de communication, le site web de télécommunication (TCW) fournissant ladite information de session multiréseau à l'entité spécifique (SE).

8. Site web de télécommunication (TCW) selon la revendication 7, dans lequel le processeur (2) est configuré pour munir l'entité spécifique (SE) d'une information respective concernant les communications respectives.

9. Site web de télécommunication (TCW) selon l'une quelconque des revendications 7 et 8, dans lequel le processeur (2) est configuré pour identifier les communications respectives exécutées dans des premier et second environnements de communication (CE1, CE2).

10. Site web de télécommunication (TCW) selon la revendication 9, dans lequel le processeur (2) est configuré pour identifier les communications respectives exécutées dans des premier et second environnements de communication (CE1, CE2) en utilisant une information de recherche fournie par l'entité spécifique (SE).
